# EUROPÄISCHE PATENTSCHRIFT

(11) **EP 2 232 346 B1**
(45) Veröffentlichungstag und Bekanntmachung des Hinweises auf die Patenterteilung: **06.03.2013**
(21) Anmeldenummer: 08707128.8
(22) Anmeldetag: 18.01.2008
(51) Int. Cl.: G05B 19/418

(54) **PLANUNGSVORRICHTUNG UND VERFAHREN ZUR PLANUNG EINER TECHNISCHEN ANLAGE**
PLANNING DEVICE AND METHOD FOR PLANNING A TECHNICAL INSTALLATION
DISPOSITIF DE PLANIFICATION ET PROCÉDÉ POUR PLANIFIER UNE INSTALLATION TECHNIQUE

(43) Veröffentlichungstag der Anmeldung: 29.09.2010
(73) Patentinhaber: Siemens Aktiengesellschaft, 80333 München (DE)
(72) Erfinder: SCHLERETH, Michael, 91452 Wilhermsdorf (DE); STOLPER, Thilo, 90402 Nürnberg (DE)
(86) Internationale Anmeldenummer: PCT/EP2008/000386
(87) Internationale Veröffentlichungsnummer: WO 2009/089849

(56) Entgegenhaltungen:
- DE-A1- 19 917 102

## Beschreibung

Die Erfindung betrifft eine Planungsvorrichtung zur Planung einer technischen Anlage, wobei die technische Anlage aus Modulen gebildet ist, die jeweils mechanische Komponenten und elektrische Komponenten aufweisen, wobei jedes Modul eine Soll-Funktionalität aufweist. Die Erfindung betrifft auch ein entsprechendes Verfahren.

Aus der Deutschen Offenlegungsschrift DE 199 17 102 A1 ist zum Beispiel ein Programm zur Planung einer elektrischen Anlage bekannt, wobei die Anlage beispielsweise Gateways mit angereihten Modulen und zugehörigen Modulscheiben umfasst. Dabei können die Module oder Modulscheiben Funktionalitäten wie z.B. "Digital In", "Digital Out" oder ähnliche aufweisen.

In dem Artikel"objektorientierte Fabrikplanung" von G. Schuh, Werkstatttechnik Online, Jahrgang 97 (2007), H. 3, ist ein Verfahren für eine objektorientierte Fabrikplanung beschrieben. Es wird ein Vergleich mit dem Software Engineering hergestellt. Für die Planung einer Fabrik wird ein hierarchischer Aufbau vorgeschlagen. Module der Fabrik werden in hierarchisch aufeinander folgenden Planungsstufen von einer groben, schematischen Darstellung zu einer feinen, detaillierteren Darstellung ausgestaltet. Jedes Modul ist dabei, wie in der objektorientierten Programmierung, nach dem Prinzip der Kapselung so ausgestaltet, dass es bei einer Änderung der Planung leicht ausgetauscht werden kann. Interaktionen sind nur über explizit zur Verfügung gestellte Schnittstellen möglich.

Der digitalen Planung von technischen Anlagen kommt eine immer größere Bedeutung zu. Durch eine virtuelle Abbildung der technischen Anlage können Investitionen bereits in einem sehr frühen Stadium durch eine Simulation abgesichert werden. Bei
Produktionsanlagen kann eine Produktplanung sehr viel schneller in ein fertiges Produkt umgesetzt werden. Eine solche digitale Planung erfordert eine sehr hohe Datenmenge. Neben dem reinen digitalen Abbild der technischen Anlage durch ihre Geometrie in Form einer 3D-Simulation wird zunehmend versucht, auch die technischen Funktionalitäten der Anlage in Form einer virtuellen Inbetriebsetzung zu simulieren. Neben geometrischen und mechanischen Eigenschaften der Komponenten der technischen Anlage kommen damit auch immer mehr elektrische Eigenschaften hinzu. Bei einer Produktionsanlage werden also neben den geometrischen Eigenschaften, zum Beispiel eines Fertigungsroboters und den Maßen einer Fertigungszelle, auch Eigenschaften zum Beispiel eines elektrischen Motors, wie elektrische Ausgangsleistung oder Drehmoment, berücksichtigt. Alle Komponenten stehen in der Regel miteinander in einer Wechselwirkung. Um die Eignung einer Komponente für die vorgesehene Aufgabe zu prüfen, müssen weitere Komponenten bereits ausgewählt sein, um mittels einer Simulation festzustellen, ob das gewünschte Ergebnis erreicht wird. Die damit sich ergebende große Vielfalt an möglichen Kombinationen führte zu einem großen Planungsaufwand bei der Ermittlung einer optimalen KonFIGation.

Der Erfindung liegt die Aufgabe zu Grunde, eine Planungsvorrichtung anzugeben, mit der eine technische Anlage mit besonders geringem Planungsaufwand planbar ist. Weitere Aufgabe der Erfindung ist die Angabe eines entsprechenden Planungsverfahrens.

Erfindungsgemäß wird die auf eine Planungsvorrichtung gerichtete Aufgabe gelöst durch Angabe einer Planungsvorrichtung zur Planung einer technischen Anlage, wobei die technische Anlage aus Modulen gebildet ist, die jeweils mechanische Komponenten und elektrische Komponenten aufweisen, wobei jedes Modul eine Sollfunktionalität aufweist und wobei eine Bibliothek von Sätzen von elektrischen Komponenten mit Eigenschaften dieser Komponenten vorgesehen ist, aus der mit einer Zuweisungsfunktion ein Komponentensatz einem Modul zuweisbar ist und aus den in Komponentenparametern definierten Eigenschaften dieses Komponentensatz abgeleitet wird, ob die mit diesem Komponentensatz sich ergebende Modulfunktionalität mit der Sollfunktionalität im Rahmen einer vorgebbaren Genauigkeit übereinstimmt.

Die Erfindung geht dabei von Erkenntnis aus, dass die infrage kommenden elektrischen Komponenten gruppiert werden können. Eine solche Gruppierung kann z.B. herstellerorientiert sein. Elektrische Komponenten eines Herstellers weisen zueinander in der Regel eine bessere Kompatibilität auf, als elektrische Komponenten verschiedener Hersteller. Zudem gibt es oftmals für technische Anlagen Vorgaben bezüglich der Herstellerauswahl für die elektrischen Komponenten. Eine weitere Gruppierungsmöglichkeit kann mit Blick auf die Funktionalität bestehen. Zum Beispiel könnten elektrische Komponenten bezüglich ihres Sicherheitslevels gruppiert werden.

Durch eine Gruppierung der elektrischen Komponenten in einem Komponentensatz wird nunmehr eine deutliche Vereinfachung des Planungsprozesses erreicht. Die Funktionalität eines Moduls wird durch eine Sollfunktionalität beschrieben. Zur Realisierung dieser Sollfunktionalität kommt jetzt ein ganzer Komponentensatz zum Einsatz. In diesem Sinne kann ein Komponentensatz gewissermaßen als eine Kollektion in Anlehnung an eine Kleiderkollektion verstanden werden. Das Überstreifen der Kollektion zur Anprobe entspricht einem Vergleich der sich aus der Kollektion ergebenden Funktionalität mit der Sollfunktionalität. Die Auswahlmöglichkeiten eines Planers werden also durch den Komponentensatz eingeschränkt, was aber einerseits zu einer deutlichen Vereinfachung des Planungsprozesses führt, andererseits bei Verwendung bewährter Kollektionen, also Komponentensätzen, auch zu einem Qualitätsgewinn führt. Komponentensätze werden in einer Bibliothek gespeichert. Gegenüber bisherigen Planungsansätzen, die allenfalls eine Auswahl einzelner elektrischer Komponenten aus einer Sammlung verschiedener Komponenten gleichen Typs zuließen, werden nunmehr Komponenten verschiedenen Typs miteinander zu einem Komponentensatz gruppiert, so dass die Auswahl eines Komponentensatz bei der Planung zur Festlegung einer Reihe von Komponenten verschiedener Funktionalität führt. Die Komponenten eines Komponentensatz sind dabei miteinander kompatibel. Ein Komponentensatz weist also bereits eine innere Verträglichkeit auf. Vorzugsweise wird der Komponentensatz mit der Zeit so weiterentwickelt, dass eine Übereinstimmung seiner Funktionalität mit der Sollfunktionalität einer möglichst großen Zahl von Modulen erreicht wird.

Bevorzugt erfolgt die Prüfung auf Übereinstimmung durch eine Simulation der Modulfunktionalitäten, wobei der Simulation die Komponentenparameter zugrunde gelegt werden. Eine digitale Planung einer technischen Anlage kann durch eine Simulation der Abläufe auf der technischen Anlage vervollständigt werden. Durch eine solche Simulation kann festgestellt werden, ob die verwendeten Komponenten tatsächlich die gewünschte Funktionalität liefern. Zum Beispiel könnte eine Echtzeitsimulation ergeben, dass die verwendeten Komponenten nicht zu einem Ablauf des Verfahrens in der angestrebten Geschwindigkeit führen. In diesem Fall kann also der Komponentensatz nicht unverändert zum Einsatz kommen.

Vorzugsweise erfolgt die Prüfung auf Übereinstimmung durch einen Vergleich von Sollparametern, die die Sollfunktionalität charakterisieren, mit entsprechenden Komponentenparametern des Komponentensatzes Die Sollfunktionalität wird also durch Parameter abgebildet. Ein Komponentensatz wird durch Parameter beschrieben, die zumindest teilweise in ihrer Art den Parametern der Sollfunktionalität entsprechen. Entsprechen die Parameter des Komponentensatz auch in ihrem Wert den Parametern der Sollfunktionalität, beziehungsweise liegen sie innerhalb eines entsprechenden Intervalls, so liegt die gewünschte Übereinstimmung vor.

Bevorzugt sind die elektrischen Komponenten mechatronisch mit zusätzlicher mechanischer Funktionalität ausgeführt. In zunehmendem Maße werden elektrische und mechanische Bestandteile einer Komponente zu einem integrierten Aufbau zusammengeführt. Zum Beispiel können piezoelektrische Bauteile mechanische Aufgaben erfüllen. Auch die integrierte Ausführung eines Greifarmes zusammen mit seinem elektrischen Antrieb kann eine mechatronische Komponente sein. Die Verwendung mechatronischer Komponenten führt zu einer weiteren Vereinfachung des Planungsprozess

Vorzugsweise ist die Planung durch einen in Hierarchieebenen gegliederten Planungsprozess mit aufeinander folgenden Planungsstufen durchführbar, wobei die mechanischen oder elektrischen Komponenten einer Unterplanungsstufe der mindestens zweiten Hierarchieebene die Eigenschaften der mechanischen oder elektrischen Komponenten der Oberplanungsstufe aus der der Unterplanungsstufe vorgelagerten Hierarchieebene und zusätzlich einen höheren Detaillierungsgrad hinsichtlich der Eigenschaften der mechanischen oder elektrischen Komponenten aufweist. Weiter bevorzugt weist die Planungsvorrichtung eine objektorientierte Architektur so auf, dass im Sinne der Regeln der objektorientierten Programmierung eine Planungsstufe durch Klassen beschrieben ist, die Objekte mit Eigenschaften der mechanischen und elektrischen Komponenten als Attribute und Methoden den Modulfunktionalitäten instantiieren, wobei eine Unterplanungsstufe Attribute und Methoden der Oberplanungsstufe erbt.

Durch einen in Hierarchieebenen geteilten Planungsprozess kann schrittweise in aufeinander folgenden Planungsstufen eine höhere Detailtiefe eingestellt werden. Durch eine Vererbung von Eigenschaften können Planungen einer vorhergehenden Planungsstufe in einfacher Weise konkretisiert werden. Indem nun eine Detaillierung durch Auswahl eines Komponentensatz aus einer Bibliothek verfügbar ist, kann in besonders effizienter Weise die Planung einer Planungsstufe mit hohem Detaillierungsgrad durchgeführt werden. Ein Komponentensatz ist dabei im Sinne der objektorientierten Programmierung als ein Satz von Klassen verfügbar.

Bevorzugt weist die Planungsvorrichtung eine Visualisierungsvorrichtung auf, in der die Module grafisch abbildbar sind, wobei der Detaillierungsgrad der grafischen Darstellung entlang den Planungsstufen hierarchisch absteigend wächst und wobei eine Darstellung der Unterplanungsstufe durch ein Überblenden von grafischen Elementen aus dieser Unterplanungsstufe über die Elemente ihrer Oberplanungsstufe erfolgt. Bei der Planung einer technischen Anlage ist eine Visualisierung erforderlich, die in der Regel durch eine 2D oder 3D Darstellung am Computer erfolgt. Eine erhöhte Detaillierung einer Planungsstufe wird nun günstiger Weise durch ein Überblenden ihrer Elemente über die abstrakten Elemente der vorhergehenden Planungsstufe erreicht. Die Verwendung ganzer Komponentensätze wird in dieser Visualisierung dadurch deutlich, dass eine bestimmte Kollektion wie eine Hülle über die abstraktere Darstellung gestreift wird. Eine Abweichung der sich aus der gewählten Kollektion, d.h. des den Komponentensatzes, ergebenden Funktionalität von der Sollfunktionalität kann durch grafische Mittel sichtbar gemacht werden. Zum Beispiel können Komponenten des Komponentensatz die die Abweichung von der Sollfunktionalität verursachen, blinkend oder in einer anderen Farbe dargestellt werden.

Vorzugsweise ist die technische Anlage eine Fertigungsanlagen zur Fertigung eines Produktes. Die digitale Planung einer Fabrik zur Fertigung eines Produktes ist in vielen Bereichen schon Realität. Die Planung einer solchen Fertigungsanlage bedeutet höchste Komplexität. Die Auswahl der elektrischen Komponenten, insbesondere von Automatisierungskomponenten, unterliegt in der Regel Randbedingungen des Anlagenerrichters beziehungsweise -betreibers. Insbesondere ist oft eine herstellerspezifische Auswahl zu berücksichtigen.

Die auf ein Verfahren gerichtete Aufgabe wird erfindungsgemäß gelöst durch Angabe eines Verfahrens zur Planung einer technischen Anlage, bei dem die technische Anlage aus Modulen gebildet wird, die jeweils mechanische Komponenten und elektrische Komponenten aufweisen, wobei jedes Modul eine Sollfunktionalität aufweist und wobei eine Bibliothek von Sätzen von elektrischen Komponenten mit Eigenschaften dieser Komponenten vorgesehen ist, aus der mit einer Zuweisungsfunktion ein Komponentensatz einem Modul zugewiesen wird und aus denen in Komponentenparameter definierten Eigenschaften des Komponentensatz abgeleitet wird, ob die mit diesem Komponentensatz sich ergebende Modulfunktionalität mit der Sollfunktionalität im Rahmen einer vorgebbaren Genauigkeit übereinstimmt.

Die Vorteile eines solchen Verfahrens ergeben sich aus den obigen Ausführungen zu den Vorteilen der Planungsvorrichtung

Bevorzugt erfolgt die Prüfung auf Übereinstimmung durch einen Vergleich von Sollparametern, die die Sollfunktionalität charakterisieren, mit den Komponentenparametern.

Vorzugsweise erfolgt die Prüfung auf Übereinstimmung durch eine Simulation der Modulfunktionalität, wobei der Simulation die Parameter des Komponentensatzes zugrunde gelegt werden.

Die Erfindung wird anhand der Zeichnungen näher erläutert. Es zeigen teilweise schematisch und nicht maßstäblich:
- FIG 1: eine technische Anlage,
- FIG 2: ein Modul einer technischen Anlage,
- FIG 3: eine Planungsvorrichtung und einen Komponentensatz,
- FIG 4: ein Verfahren zur Planung einer technischen Anlage und
- FIG 5: eine Visualisierungsvorrichtung.

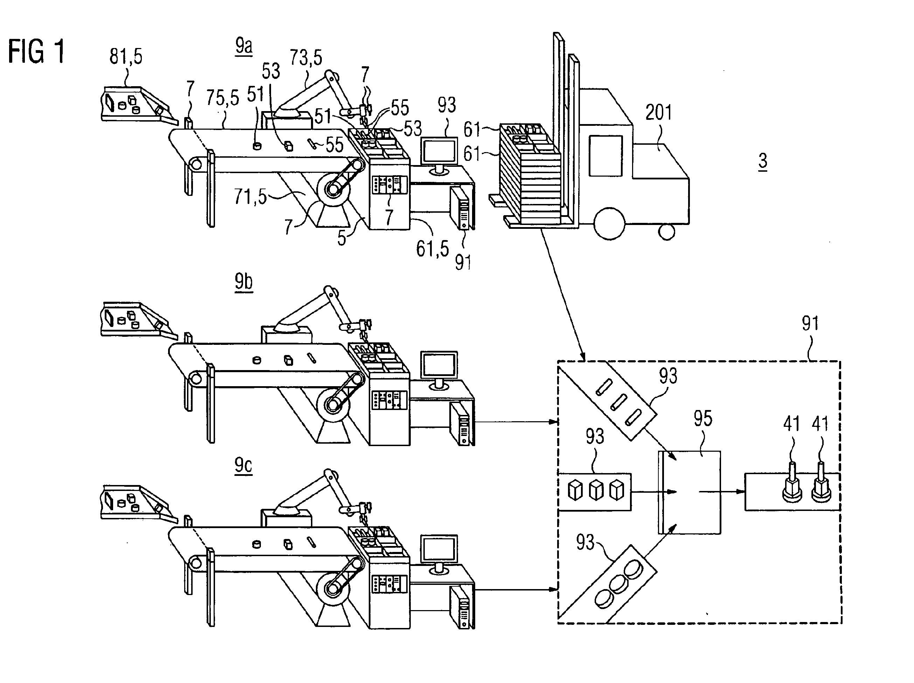

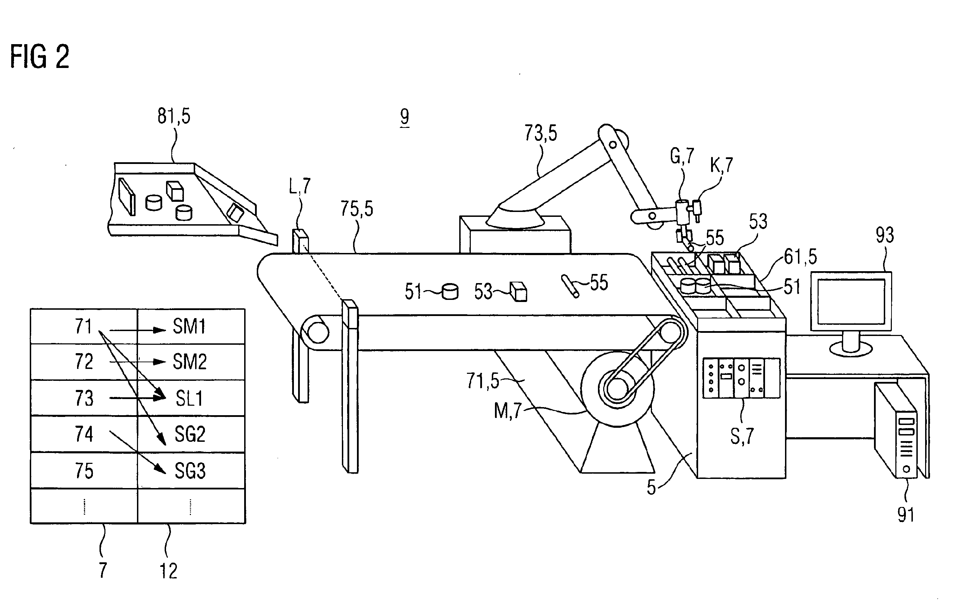

FIG 1 zeigt eine technische Anlage 3. Die technische Anlage 3 weist drei Module 9a, 9b, 9c auf. Die Module 9 werden in FIG 2 näher erläutert. Die technische Anlage 3 ist hier als Fertigungsanlage ausgeführt. Die Module 9 sortieren Fertigungsteile. Die Fertigungsteile werden in Paletten 61 über Gabelstapler 201 zu einem weiteren Fertigungsabschnitt 91 transportiert. Dort werden sie mittels Transportbändern 93 in einer Montageeinheit 95 zu einem Produkt 41 zusammengefügt. Die Planung einer solchen technischen Anlage 3 erfordert eine sehr genaue Beschreibung aller verwendeten Komponenten hinsichtlich ihrer Eigenschaften und Funktionen. Bei komplexeren technischen Anlagen führt dies schnell zu einem sehr aufwändigen Planungsprozess. Weiter unten wird näher erläutert, wie dieser Planungsprozess einfacher gestaltet werden kann.

FIG 2 zeigt eines der Module 9 der technischen Anlage 3 aus FIG 1. Das Modul 9 weist einen Roboter 73 mit einem Greifer G auf. Auf dem Greifer G ist zur Mustererkennung eine Kamera K installiert. Der Roboter 73 ist vor einem Förderer 75 aufgebaut. Der Förderer 75 weist für seinen Antrieb einen Motor M auf, der auf einem Fundament 71 aufgesetzt ist. Der Roboter 73, der Förderer 75 und das Fundament 71 sind mechanische Komponenten 5 des Moduls 9. Der Greifer G, die Kamera K und der Motor M sind elektrische Komponenten 7 des Moduls 9. Der Greifer G ist dabei als eine mechatronische Komponente ausgebildet. Neben elektrischen Komponenten für seinen Antrieb weist er auch mechanische Komponenten zum Greifen auf. Eine weitere elektrische Komponente ist eine speicherprogrammierbare Steuerung S. Diese Steuerung S dient zur Ablaufsteuerung des Fertigungsablaufes auf dem Modul 9. Mittels eines Computers 91 und eines Bildschirms 93 kann in den Ablauf eingegriffen und dieser parametriert werden. Über eine Zuführbahn 81 werden Produktteile 51, 53, 55 verschiedener Geometrie über den Förderer 75 zum Roboter 73 transportiert. Sie passieren dabei einen als Lichtschranke ausgebildeten Nährungssensor L. Der Roboter 73 erkennt mittels der Kamera K die verschiedenen Geometrien der Produktteile 51, 53, 55. Je nach Geometrie sortiert der Roboter 73 mittels des Greifer G die Produktteile 51, 53, 55 in eine Palette 61.

Die Sollfunktionalität des Moduls 9 ist in Parametern F beschrieben. Zum Beispiel gibt ein Parameter F1 einen Solldurchsatz an. Dies führt zu einer Vorgabe hinsichtlich einer Menge von Sollparametern 12 für die elektrischen Komponenten 7, z.B. für einen Parameter SM1 des Motors M aber auch hinsichtlich eines Parameters SL1 für eine Auflösung der Lichtschranke L oder eines Parameters SG2 der Greifgeschwindigkeit des Greifer G. So bestimmen auch andere Parameter F der Sollfunktionalität des Moduls 9 Parameter der elektrischen Komponenten 7.

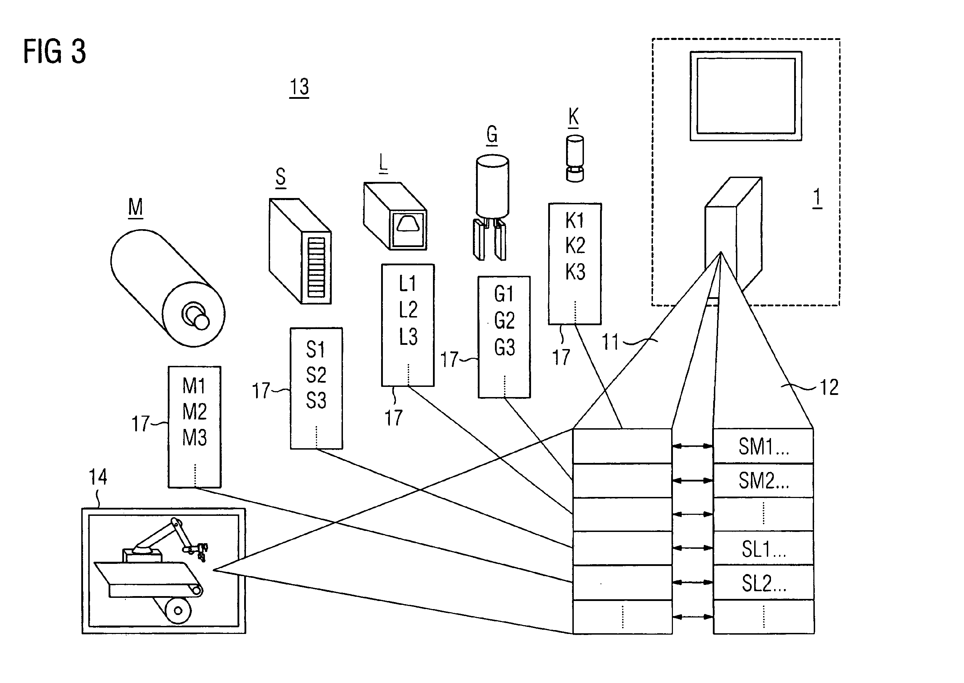

In FIG 3 ist ein Komponentensatz 13 abgebildet. Der Komponentensatz 13 weist einen Motor M, eine Steuerung S, eine Lichtschranke L, einem Greifer G und eine Kamera K auf. Jede dieser elektrischen Komponenten 7 weist einen Komponentenparametersatz 17 auf. Der Komponentensatz 13 ist zusammen mit weiteren Komponentensätzen in einer Bibliothek 11 einer Planungsvorrichtung 1 gespeichert. Der Planungsvorrichtung 1 stehen ebenfalls die Sollparameter 12 zur Verfügung, die, wie oben beschrieben, die Sollfunktionalität des Moduls 9 beschreiben. Durch einen Vergleich der Komponentenparameter 17 des Komponentensatz 13 mit den Sollparametern 12 wird überprüft, ob durch den Komponentensatz 13 die Sollfunktionalität des Moduls 9 umgesetzt werden kann. Eine weitere Möglichkeit für diese Überprüfung bietet eine Simulation des Fertigungsablaufes auf dem Modul 9. Hierzu wird mittels einer Simulationsvorrichtung 14 der Fertigungsablauf des Moduls 9 simuliert, wie er sich mit dem verwendeten Komponentensatz 13 ergeben würde. Wenn die Simulation einen zufriedenstellenden Fertigungsablauf ergibt, ist die Überprüfung erfolgreich.

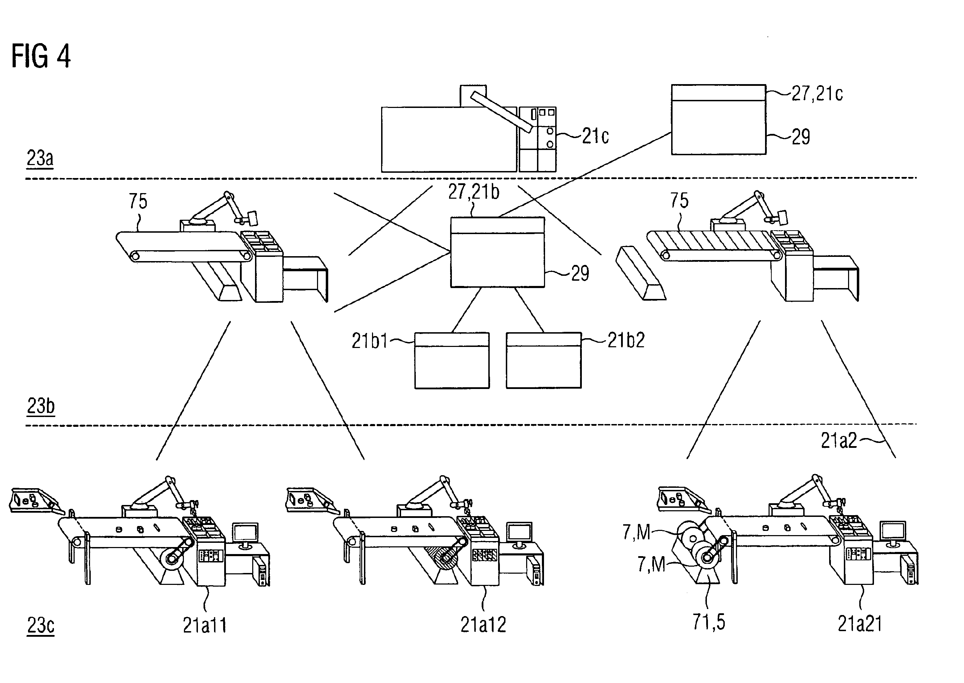

In FIG 4 ist ein Verfahren zur Planung einer technischen Anlage 3 abgebildet. Ein Planungsprozess ist in Hierarchieebenen 23 aufgeteilt. In einer ersten Hierarchieebene 23a wird ein erster Planungsstufe 21c durchgeführt. In dieser Planungsstufe erfolgt lediglich eine grob schematische Darstellung in 2D Format für das Modul 9. In einer nächsten Planungsstufe 21b der zweiten Hierarchieebene 23b wird das Modul 9 näher konkretisiert. Dabei kann in einer ersten Variante 21b1 der Förderer 75 als ein Bandförderer ausgebildet sein. In einer zweiten Variante 21b2 ist der Förderer 75 als Kettenförderer ausgebildet. Diese zwei Varianten bedingen unterschiedliche Ausstattungen bei den elektrischen Komponenten. Die Ausstattung der elektrischen Komponenten erfolgt in Hierarchieebene 23c mit der Planungsstufe 21a. Auch hier können wieder unterschiedliche Varianten entstehen. Mit einem ersten Komponentensatz 13 entsteht eine erste Variante 21a11. Mit einem zweiten Komponentensatz 13 entsteht eine zweite Variante 21a12. Durch eine Simulation des Fertigungsablaufes auf die Module 9 wird bei beiden Varianten überprüft, ob die Sollfunktionalität des Moduls 9 erreicht wird. Aus der zweiten Variante der zweiten Planungsstufe 21b folgen ebenfalls wieder verschiedene mögliche Varianten. Aus der Bibliothek 11 kommen hier Komponentensätze für Kettenförderer in Frage. Diese unterscheiden sich zum Beispiel in der Zahl der Antriebe von dem Bandförderer.

Dieser Planungsprozess wird günstiger Weise in einer objektorientierten Architektur durchgeführt. Einer Hierarchieebene wird jeweils eine Klasse 27 zugeordnet. Die Klasse 27 instantiiert Objekte 29. Eine nachgeordnete Hierarchieebene 23b erbt die Attribute und Methoden der vorgelagerten Hierarchieebene 23a, das heißt die Klasse 27 einer nachgeordneten Hierarchieebene 23b erben die Attribute und Methoden der Klasse 27 der vorgelagerten Hierarchieebene 23a.

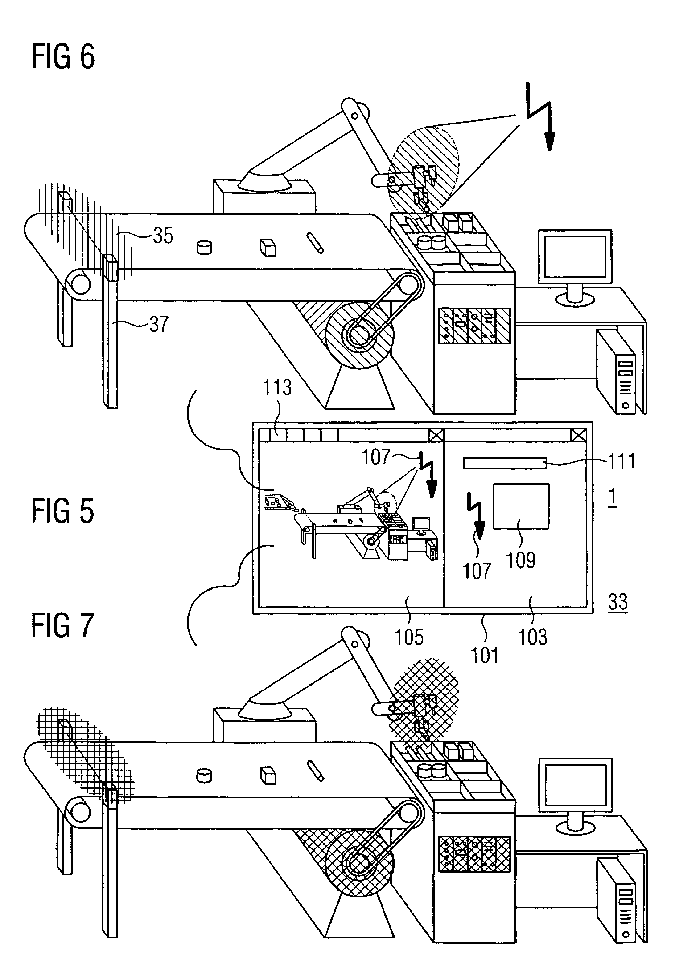

FIG 5 zeigt eine Visualisierungsvorrichtung 33 einer Planungsvorrichtung 1. Auf einer grafischen Benutzerschnittstelle 101 sind ein erstes Fenster 103 und ein zweites Fenster 105 dargestellt. Im zweiten Fenster 105 ist die technische Anlage 3 grafisch abgebildet. Im ersten Fenster 103 wird mittels eines Eingabedialogs 111 ein bestimmter Komponentensatz für ein Modul der technischen Anlage ausgewählt. Mittels eines Menüs 113 wird eine Simulation des Fertigungsablaufes der technischen Anlage mit dem ausgewählten Komponentensatz durchgeführt. Wird eine Abweichung der simulierten Funktionalität von der vorgegebenen Sollfunktionalität festgestellt, so erfolgt ein Fehlerhinweis 107. Im ersten Fenster 103 wird eine Fehlerbeschreibung 109 für den Fehlerhinweis 107 ausgegeben. In FIG 5a ist dargestellt, wie ein erster Komponentensatz durch eine erste Schraffur kenntlich gemacht wird, unterschieden von einer anderen Schraffur eines anderen Komponentensatzes in FIG 5b. Während mit dem Komponentensatz aus FIG 5b die Sollfunktionalität erreicht wird, ergibt sich mit den Komponentensatz der FIG 5a ein Fehlerhinweis.

## Patentansprüche

1. Planungsvorrichtung (1) zur Planung einer technischen Anlage (3), wobei die technische Anlage (3) aus Modulen (9) gebildet ist, die jeweils mechanische Komponenten (5) und elektrische Komponenten (7) aufweisen, wobei jedes Modul (9) eine Sollfunktionalität aufweist, **dadurch gekennzeichnet, dass** eine Bibliothek (11) von Sätzen von elektrischen Komponenten (7) mit Eigenschaften dieser Komponenten vorgesehen ist, aus der mit einer Zuweisungsfunktion ein Komponentensatz (13) einem Modul (9) zuweisbar ist und aus den in Komponentenparametern (17) definierten Eigenschaften dieses Komponentensatzes (13) abgeleitet wird, ob die mit diesem Komponentensatz (13) sich ergebende Modulfunktionalität mit der Sollfunktionalität im Rahmen einer vorgebbaren Genauigkeit übereinstimmt.

2. Planungsvorrichtung (1) nach Anspruch 1, bei der die Prüfung auf Übereinstimmung durch einen Vergleich von Sollparametern (15), die die Sollfunktionalität charakterisieren, mit entsprechenden Komponentenparametern (17) des Komponentensatzes (13) erfolgt.

3. Planungsvorrichtung (1) nach Anspruch 1, bei der die Prüfung auf Übereinstimmung durch eine Simulation der Modulfunktionalität erfolgt, wobei der Simulation die Komponentenparameter (17) zugrunde gelegt wird.

4. Planungsvorrichtung (1) nach einem der vorhergehenden Ansprüche, bei der die elektrischen Komponenten (7) mechatronisch mit zusätzlicher mechanischer Funktionalität ausgeführt sind.

5. Planungsvorrichtung (1) nach einem der vorhergehenden Ansprüche, bei der die Planung durch einen in Hierarchieebenen (23) gegliederten Planungsprozess mit aufeinanderfolgenden Planungsstufen (21) durchführbar ist, wobei die mechanischen (5) oder elektrischen Komponenten (7) einer Unterplanungsstufe (21a) der mindestens zweiten Hierarchieebene (23b) die Eigenschaften der mechanischen (5) oder elektrischen Komponenten (7) der Oberplanungsstufe (21b) aus der der Unter-Planungsstufe (21a) vorgelagerten Hierarchieebene (23) und zusätzlich einen höheren Detaillierungsgrad hinsichtlich der Eigenschaften der mechanischen (5) oder elektrischen Komponenten (7) aufweisen.

6. Planungsvorrichtung (1) nach Anspruch 5, die eine objektorientierte Architektur (25) so aufweist, dass im Sinne der Regeln der objektorientierten Programmierung eine Planungsstufe (21) durch Klassen (27) beschrieben ist, die Objekte (29) mit Eigenschaften der mechanischen und elektrischen Komponenten (7) als Attribute und mit Methoden (31) der Modulfunktionalitäten instantiieren, wobei eine Unterplanungsstufe (21a) Attribute und Methoden der Oberplanungsstufe (21b) erbt.

7. Planungsvorrichtung (1) nach Anspruch 5 oder 6, die eine Visualisierungsvorrichtung (33) aufweist, in der die Module (9) grafisch abbildbar sind, wobei der Detaillierungsgrad der grafischen Darstellung entlang der Planungsstufen (21) hierarchisch absteigend wächst und wobei eine Darstellung der Unterplanungsstufe (21a) durch ein Überblenden von grafischen Elementen (35) aus dieser Unter-Planungsstufe (21a) über die Elemente (37) ihrer Oberplanungsstufe (21b) so erfolgt, dass die schematischere Darstellung der Oberplanungsstufe (21b) durch den höheren Detailreichtum der Unterplanungsstufe (21a) angereichert wird.

8. Planungsvorrichtung (1) nach einem der vorhergehenden Ansprüche, bei der die technische Anlage (3) eine Fertigungsanlage (3) zur Fertigung eines Produktes (41) ist.

9. Verfahren zur Planung einer technischen Anlage (3), bei dem die technische Anlage (3) aus Modulen (9) gebildet wird, die jeweils mechanische Komponenten (5) und elektrische Komponenten (7) aufweisen, wobei jedes Modul (9) eine Soll-Funktionalität aufweist, **dadurch gekennzeichnet, dass** eine Bibliothek (11) von Sätzen von elektrischen Komponenten (7) mit Eigenschaften dieser Komponenten (7) vorgesehen ist, aus der mit einer Zuweisungsfunktion (113) ein Komponentensatz (13) einem Modul (9) zugewiesen wird und aus den in Komponentenparametern (17) definierten Eigenschaften des Komponentensatzes (13) abgeleitet wird, ob die mit diesem Komponentensatz (13) sich ergebende Modulfunktionalität mit der Soll-funktionalität im Rahmen einer vorgebbaren Genauigkeit übereinstimmt.

10. Verfahren nach Anspruch 9, bei der die Prüfung auf Übereinstimmung durch einen Vergleich von Sollparametern (12), die die Sollfunktionalität charakterisieren, mit den Komponentenparametern (17) erfolgt.

11. Verfahren nach Anspruch 9, bei der die Prüfung auf Übereinstimmung durch eine Simulation der Modulfunktionalität erfolgt, wobei der Simulation die Parameter des Komponentensatzes (13) zugrunde gelegt werden.

12. Verfahren nach einem der Ansprüche 9 bis 11, bei dem bei einem nicht mit der Modulfunktionalität übereinstimmenden Komponentensatz (13) ein neuer Komponentensatz (13) so erstellt wird, dass die Übereinstimmung entsteht.

## Claims

1. Planning device (1) for planning a technical installation (3), with the technical installation (3) being formed from modules (9) having mechanical components (5) and electrical components (7) in each instance, with each module (9) having a desired functionality, **characterised in that** a library (11) of sets of electrical components (7) is provided with properties of these components, from which a component set (13) can be allocated to a module (9) by means of an allocation function and the properties of this component set defined in component parameters (17) can be used to deduce whether the module functionality resulting from said component set (13) corresponds to the desired functionality with a definable accuracy.

2. Planning device (1) according to claim 1, in which the check for correspondence takes place by comparing desired parameters (15), which characterise the desired functionality, with corresponding component parameters (17) of the component set (13).

3. Planning device (1) according to claim 1, in which the check for correspondence takes place by simulating the module functionality, with the component parameters (17) underlying the simulation.

4. Planning device (1) according to one of the preceding claims, in which the electrical components (7) are implemented mechatronically with an additional mechanical functionality.

5. Planning device (1) according to one of the preceding claims, in which the planning can be implemented by means of a planning process which is structured in hierarchical levels (23) and has consecutive planning stages (21), with the mechanical (5) or electrical components (7) of a lower planning stage (21a) of the at least second hierarchical level (23b) having the properties of the mechanical (5) or electrical components (7) of the upper planning stage (21b) from the hierarchical level (23) upstream of the lower planning stage (21a) and also having a higher level of detail in respect of the properties of the mechanical (5) or electrical components (7).

6. Planning device (1) according to claim 5, which has an object-oriented architecture (25) such that a planning stage (21) is described by classes (27) within the meaning of the rules of the object-oriented programming, the objects (29) instantiate with properties of the mechanical and electrical components (7) as attributes and with methods (31) of the module functionalities, with a lower planning stage (21a) inheriting attributes and methods of the upper planning stage (21b).

7. Planning device (1) according to claim 5 or 6, which has a visualisation device (33), in which the modules (9) can be graphically shown, with the degree of detail of the graphical display increasing downwards hierarchically along the planning stages (11) and with the lower planning stage (21a) being displayed by superimposing graphical elements (35) from this lower planning stage (21a) over the elements of its upper planning stage (21b) such that the more schematic display of the upper planning stage (21b) is enriched by the greater richness of detail of the lower planning stage (21a).

8. Planning device (1) according to one of the preceding claims, in which the technical installation (3) is a production line (3) for producing a product (41).

9. Method for planning a technical installation (3), in which the technical installation (3) is formed from modules (9) having mechanical components (5) and electrical components (7) in each instance, with each module (9) having a desired functionality, **characterised in that** a library (11) of sets of electrical components (7) is provided with properties of these components (7), from which a component set (13) can be allocated to a module (9) by means of an allocation function (113) and the properties of the component set (13) defined in component parameters (17) can be used to deduce whether the module functionality resulting from said component set (13) corresponds to the desired functionality with a definable accuracy.

10. Method according to claim 9, in which the check for correspondence takes place by comparing desired parameters (12) which characterise the desired functionality with the component parameters (17).

11. Method according to claim 9, in which the check for correspondence takes place by simulating the module functionality, with the parameters of the component set (13) underlying the simulation.

12. Method according to one of claims 9 to 11, in which a new component set (13) is created if the component set (13) does not correspond to the module functionality such that the correspondence results.

## Revendications

1. Dispositif de planification (1) pour planifier une installation technique (3), l'installation technique (3) étant constituée de modules (9) qui comportent chacun des composants mécaniques (5) et des composants électriques (7), chaque module (9) présentant une fonctionnalité prescrite, **caractérisé en ce qu'**il est prévu une bibliothèque (11) de jeux de composants électriques (7) avec des propriétés de ces composants, à partir de laquelle un jeu de composants (13) peut être attribué à un module (9) par une fonction d'attribution, et **en ce qu'**il est déduit des propriétés de ce jeu de composants (13), définies dans des paramètres de composants (17), si la fonctionnalité de module résultant de ce jeu de composants (13) coïncide avec la fonctionnalité prescrite dans le cadre d'une précision prédéterminable.

2. Dispositif de planification (1) selon la revendication 1, dans lequel la vérification de la coïncidence s'effectue par une comparaison de paramètres prescrits (15) qui caractérisent la fonctionnalité prescrite, avec des paramètres correspondants de composants (17) du jeu de composants (13).

3. Dispositif de planification (1) selon la revendication 1, dans lequel la vérification de la coïncidence s'effectue par une simulation de la fonctionnalité de module, la simulation se basant sur les paramètres de composants (17).

4. Dispositif de planification (1) selon l'une des revendications précédentes, dans lequel les composants électriques (7) sont réalisés mécatroniquement avec une fonctionnalité mécanique additionnelle.

5. Dispositif de planification (1) selon l'une des revendications précédentes, dans lequel la planification peut être réalisée par un processus de planification organisé en niveaux hiérarchiques (23) avec une succession de niveaux de planification (21), les composants mécaniques (5) ou électriques (7) d'un niveau de planification inférieur (21a) du au moins second niveau hiérarchique (23b) présentant les propriétés des composants mécaniques (5) ou électriques (7) du niveau de planification supérieur (21b) du niveau hiérarchique (23) placé en amont du niveau de planification inférieur (21a) et en outre un degré de détail supérieur en termes de propriétés des composants mécaniques (5) et électriques (7).

6. Dispositif de planification (1) selon la revendication 5, lequel présente une architecture orientée objet (25) de sorte que selon les règles de la programmation orientée objet un niveau de planification (21) est décrit par des classes (27) qui instancient des objets (29) avec des propriétés des composants mécaniques et électriques (7) comme attributs et avec des méthodes (31) des fonctionnalités de module, un niveau de planification inférieur (21a) héritant des attributs et méthodes du niveau de planification supérieur (21b).

7. Dispositif de planification (1) selon la revendication 5 ou 6, lequel comporte un dispositif de visualisation (33) dans lequel les modules (9) peuvent être représentés graphiquement, le degré de détail de la représentation graphique croissant le long des niveaux de planification (21) en descendant dans la hiérarchie et une représentation du niveau de planification inférieur (21a) s'effectuant par une superposition d'éléments graphiques (35) de ce niveau de planification inférieur (21a) sur les éléments (37) de son niveau de planification supérieur (21b) de telle manière que la représentation plus schématique du niveau de planification supérieur (21b) est enrichie par la plus grande richesse de détails du niveau de planification inférieur (21a).

8. Dispositif de planification (1) selon l'une des revendications précédentes, dans lequel l'installation technique (3) est une installation de fabrication (3) pour la fabrication d'un produit (41).

9. Procédé de planification d'une installation technique (3), dans lequel l'installation technique (3) est constituée de modules (9) qui comportent chacun des composants mécaniques (5) et des composants électriques (7), chaque module (9) présentant une fonctionnalité prescrite, **caractérisé en ce qu'**il est prévu une bibliothèque (11) de jeux de composants électriques (7) avec des propriétés de ces composants (7), à partir de laquelle un jeu de composants (13) est attribué à un module (9) par une fonction d'attribution (113), et **en ce qu'**il est déduit des propriétés de ce jeu de composants (13), définies dans des paramètres de composants (17), si la fonctionnalité de module résultant de ce jeu de composants (13) coïncide avec la fonctionnalité prescrite dans le cadre d'une précision prédéterminable.

10. Procédé selon la revendication 9, dans lequel la vérification de la coïncidence s'effectue par une comparaison de paramètres prescrits (12) qui caractérisent la fonctionnalité prescrite, avec les paramètres de composants (17).

11. Procédé selon la revendication 9, dans lequel la vérification de la coïncidence s'effectue par une simulation de la fonctionnalité de module, la simulation se basant sur les paramètres du jeu de composants (13).

12. Procédé selon l'une des revendications 9 à 11, dans lequel, lorsque le jeu de composants (13) ne coïncide pas avec la fonctionnalité de module, un nouveau jeu de composants (13) est élaboré de manière que l'on obtienne la coïncidence.
